# EUROPEAN PATENT APPLICATION

(11) **EP 3 567 859 A1**
(43) Date of publication of application: **13.11.2019**
(21) Application number: 18889956.1
(22) Date of filing: 30.03.2018
(51) Int. Cl.: H04N 19/40

(54) **METHOD AND SYSTEM FOR PROVIDING LIVE STREAMING SERVICE**

(30) Priority: 09.03.2018 CN 201810193385
(71) Applicant: Wangsu Science & Technology Co., Ltd., Shanghai 200030 (CN)
(72) Inventor: LIN, Yiling, Xuhui District Shanghai 200030 (CN)
(74) Representative: Vinsome, Rex Martin
(86) International application number: PCT/CN2018/081457
(87) International publication number: WO 2019/169681

(57) **Abstract**

The present disclosure discloses a method and system for providing a live-broadcasting service, and relates to the technical field of video processing technologies. The method includes: after obtaining a transcoding request for target live-broadcasting data, correspondingly generating, by a management server, N transcoding tasks for the target live-broadcasting data according to N transcoding rules carried in the transcoding request; sending, by the management server, the N transcoding tasks to a target transcoding server, and sending an encapsulation task for the target live-broadcasting data to a target secondary server; obtaining, by the target transcoding server, the target live-broadcasting data, transcoding the target live-broadcasting data according to at least one of the transcoding rules, and encapsulating the transcoded target live-broadcasting data; obtaining, by the target secondary server, the target live-broadcasting data, and encapsulating the target live-broadcasting data; and providing, by the target transcoding server and/or the target secondary server, a live-broadcasting service by using a preset target VIP based on the encapsulated target live-broadcasting data. Using the present disclosure can reduce costs for providing a live-broadcasting service.

## Description

### TECHNICAL FIELD

The present disclosure relates to the technical field of video processing technologies, and in particular, to a method and system for providing a live-broadcasting service.

### BACKGROUND

Currently, a deployment manner of primary and secondary servers is used at a live-broadcasting service background. Generally, the primary server provides a live-broadcasting service, and if the primary server is faulty, the secondary server continues providing the live-broadcasting service, to ensure play stability of a live-broadcasting video.

Specifically, after a management server at the live-broadcasting service background obtains live-broadcasting data from a live-broadcasting source, the management server may provide the live-broadcasting data to both the primary server and the secondary server. The primary server and the secondary server may transcode the obtained live-broadcasting data according to a specified transcoding rule (that is, a specified resolution and a specified bit rate), and encapsulate a part of transcoded live-broadcasting data in real time. In this way, after receiving request for the live-broadcasting data from an outside world, the management server may feedback the encapsulated live-broadcasting data to the outside world.

In a process of implementing the present disclosure, the inventor finds that the existing technology has at least the following problems.

Affected by diversified playback terminals and different user requirements, the live-broadcasting service background needs to perform, according to different transcoding rules, a plurality of transcoding processes on the same live-broadcasting data by using a plurality of transcoding servers. Because there is a large quantity of live-broadcasting sources, hardware costs of the transcoding servers are relatively high, the transcoding servers have limited parallel transcoding capabilities, and so on, a large quantity of transcoding servers usually need to be deployed at the live-broadcasting service background. Consequently, costs for providing a live-broadcasting service are relatively high.

### SUMMARY

To resolve the problem in the existing technology, embodiments of the present disclosure provide a method and system for providing a live-broadcasting service. The technical solutions are as follows:
According to a first aspect of the present disclosure, a method for providing a live-broadcasting service is provided. The method includes:
after obtaining a transcoding request for target live-broadcasting data, correspondingly generating, by a management server, N transcoding tasks for the target live-broadcasting data according to N transcoding rules carried in the transcoding request;
sending, by the management server, the N transcoding tasks to a target transcoding server, and sending an encapsulation task for the target live-broadcasting data to a target secondary server;
obtaining, by the target transcoding server, the target live-broadcasting data, transcoding the target live-broadcasting data according to at least one of the transcoding rules, and encapsulating the transcoded target live-broadcasting data;
obtaining, by the target secondary server, the target live-broadcasting data, and encapsulating the target live-broadcasting data; and
providing, by the target transcoding server and/or the target secondary server, a live-broadcasting service by using a preset target virtual IP address (VIP) based on the encapsulated target live-broadcasting data.

Optionally, the sending, by the management server, an encapsulation task for the target live-broadcasting data to a target secondary server includes:
if no transcoding request for the target live-broadcasting data has been received before the current transcoding request for the target live-broadcasting data is received, sending, by the management server, the encapsulation task for the target live-broadcasting data to the target secondary server.

Optionally, the sending, by the management server, the N transcoding tasks to a target transcoding server includes:
determining, by the management server, M transcoding servers that have not transcoded the target live-broadcasting data; and
if M is greater than or equal to N, determining, by the management server, N target transcoding servers having lowest load in the M transcoding servers, and respectively sending the N transcoding tasks to the N target transcoding servers; or
if M is less than N, after respectively sending M transcoding tasks of the N transcoding tasks to the M transcoding servers, determining, by the management server, N-M target transcoding servers having lowest load in all transcoding servers, and respectively sending remaining N-M transcoding tasks of the N transcoding tasks to the N-M target transcoding servers.

Optionally, the method further includes:
determining, by the management server according to a pre-stored transcoding task weight table, weights of all transcoding tasks currently performed by each transcoding server;
determining, by the management server, a summation of the weights of all the transcoding tasks currently performed by each transcoding server as a weight of each transcoding server; and
determining, by the management server, a load level of each transcoding server according to a value of the weight of each transcoding server.

Optionally, the providing, by the target transcoding server and/or the target secondary server, a live-broadcasting service by using a preset target VIP based on the encapsulated target live-broadcasting data includes:
when the target transcoding server works normally, providing, by the target transcoding server, the live-broadcasting service by using the created target VIP based on the encapsulated target live-broadcasting data; and
when the target transcoding server is faulty, providing, by the target secondary server, the live-broadcasting service by using the created target VIP based on the encapsulated target live-broadcasting data.

According to a second aspect of the present disclosure, a system for providing a live-broadcasting service is provided. The system includes: a management server, a target transcoding server, and a target secondary server, where:
the management server is configured to: after obtaining a transcoding request for target live-broadcasting data, correspondingly generate N transcoding tasks for the target live-broadcasting data according to N transcoding rules carried in the transcoding request, send the N transcoding tasks to the target transcoding server, and send an encapsulation task for the target live-broadcasting data to the target secondary server;
the target transcoding server is configured to: obtain the target live-broadcasting data, transcode the target live-broadcasting data according to at least one of the transcoding rules, encapsulate the transcoded target live-broadcasting data, and provide a live-broadcasting service by using a preset target VIP based on the encapsulated target live-broadcasting data; and
the target secondary server is configured to: obtain the target live-broadcasting data, encapsulate the target live-broadcasting data, and provide the live-broadcasting service by using the preset target VIP based on the encapsulated target live-broadcasting data.

Optionally, the management server is specifically configured to:
if no transcoding request for the target live-broadcasting data has been received before the current transcoding request for the target live-broadcasting data is received, send the encapsulation task for the target live-broadcasting data to the target secondary server.

Optionally, the management server is specifically configured to:
determine M transcoding servers that have not transcoded the target live-broadcasting data; and
if M is greater than or equal to N, determine N target transcoding servers having lowest load in the M transcoding servers, and respectively send the N transcoding tasks to the N target transcoding servers; or
if M is less than N, after respectively sending M transcoding tasks of the N transcoding tasks to the M transcoding servers, determine N-M target transcoding servers having lowest load in all transcoding servers, and respectively send remaining N-M transcoding tasks of the N transcoding tasks to the N-M target transcoding servers.

Optionally, the management server is further configured to:
determine, according to a pre-stored transcoding task weight table, weights of all transcoding tasks currently performed by each transcoding server;
determine a summation of the weights of all the transcoding tasks currently performed by each transcoding server as a weight of each transcoding server; and
determine a load level of each transcoding server according to a value of the weight of each transcoding server.

Optionally, the target transcoding server is specifically configured to: when the target transcoding server works normally, provide the live-broadcasting service by using the preset target VIP based on the encapsulated target live-broadcasting data; and
the target secondary server is specifically configured to: when the target transcoding server is faulty, provide the live-broadcasting service by using the preset target VIP based on the encapsulated target live-broadcasting data.

The technical solutions provided in the embodiments of the present disclosure have the following beneficial effects:

In the embodiments of the present disclosure, after obtaining a transcoding request for target live-broadcasting data, a management server correspondingly generates N transcoding tasks for the target live-broadcasting data according to N transcoding rules carried in the transcoding request. The management server sends the N transcoding tasks to a target transcoding server, and sends an encapsulation task for the target live-broadcasting data to a target secondary server. The target transcoding server obtains the target live-broadcasting data, transcodes the target live-broadcasting data according to at least one of the transcoding rules, and encapsulates the transcoded target live-broadcasting data. The target secondary server obtains the target live-broadcasting data, and encapsulates the target live-broadcasting data. The target transcoding server and/or the target secondary server provide(s) a live-broadcasting service by using a preset target VIP based on the encapsulated target live-broadcasting data. In this way, an ordinary server having relatively low hardware costs may be used as a secondary server, and a plurality of transcoding servers transcoding the same live-broadcasting data may use a same server as a secondary server, thereby reducing the quantity of transcoding servers required by a live-broadcasting service background, and further reducing costs for providing a live-broadcasting service.

### BRIEF DESCRIPTION OF THE DRAWINGS

To describe the technical solutions in the embodiments of this disclosure more clearly, the following briefly describes the accompanying drawings required for describing the embodiments. Apparently, the accompanying drawings in the following descriptions merely show some embodiments of this disclosure, and a person of ordinary skill in the art may still derive other drawings from these accompanying drawings without creative efforts.
FIG. 1 is a schematic framework diagram of a system for providing a live-broadcasting service according to an embodiment of the present disclosure;
FIG. 2 is a flowchart of a method for providing a live-broadcasting service according to an embodiment of the present disclosure;
FIG. 3 is a schematic diagram of VIPs of transcoding servers and of secondary servers according to an embodiment of the present disclosure;
FIG. 4 is a schematic framework diagram of a system for providing a live-broadcasting service according to an embodiment of the present disclosure; and
FIG. 5 is a schematic framework diagram of a system for providing a live-broadcasting service according to an embodiment of the present disclosure.

### DETAILED DESCRIPTION

To make the objective, technical solutions, and advantages of the present disclosure clearer, the following further describes the embodiments of the present disclosure in detail with reference to the accompanying drawings.

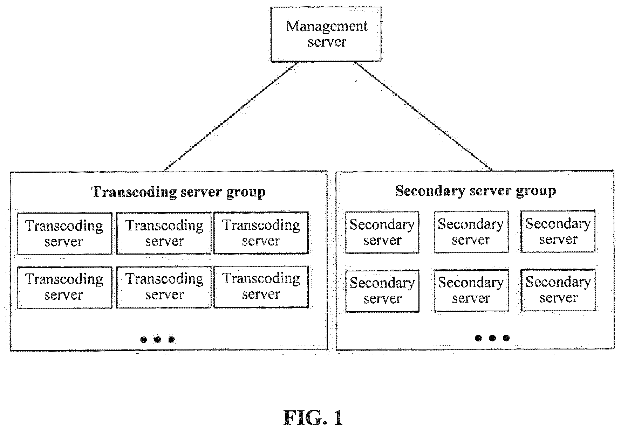

An embodiment of the present disclosure provides a method for providing a live-broadcasting service. The method may be implemented by a management server, a transcoding server, and a secondary server in a live-broadcasting data processing system together. The management server may be configured to: receive a transcoding request for live-broadcasting data, generate a corresponding transcoding task, and assign a transcoding task. The transcoding server may be a server of a transcoding server group in the live-broadcasting data processing system, and may be configured to transcode and encapsulate the live-broadcasting data and so on. The transcoding server group may include a plurality of transcoding servers. The secondary server may belong to a secondary server group in the live-broadcasting data processing system, and may be configured to encapsulate the live-broadcasting data. The secondary server group may include a plurality of secondary servers. For a specific system framework, refer to FIG. 1. The foregoing servers may each include a processor, a memory and a transceiver. The processor may be configured to provide a live-broadcasting service in the following procedure. The memory may be configured to store data required and generated in the following processing process. The transceiver may be configured to send and receive related data in the following processing process.

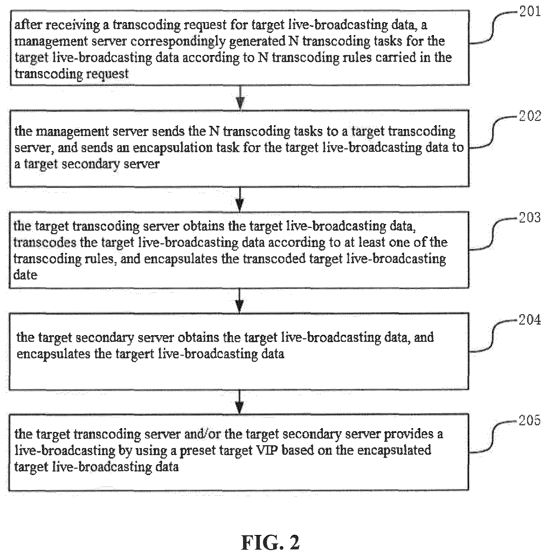

The following describes the processing procedure shown in FIG. 2 in detail, with reference to specific implementations and the content may be as follows:

Step 201. After receiving a transcoding request for target live-broadcasting data, a management server correspondingly generates N transcoding tasks for the target live-broadcasting data according to N transcoding rules carried in the transcoding request.

During implementation, when live-broadcasting data (for example, the target live-broadcasting data) of a live-broadcasting channel needs to be transcoded, the management server may obtain the transcoding request for the target live-broadcasting data. In one case, if a live-broadcasting data processing system is an embedded system of a live-broadcasting service background, the foregoing transcoding request may be manually set by technical personnel of the live-broadcasting service background on the management server, or may be sent by another server of the live-broadcasting service background to the management server. In another case, if the live-broadcasting data processing system is a system independent of the live-broadcasting service background, the foregoing transcoding request may be sent by a live-broadcasting service background system to the management server.

The transcoding request may carry N (N is a positive integer) transcoding rules, and each transcoding rule records specified target resolution and a specified target bit rate. Subsequently, the management server may extract the N transcoding rules in the transcoding request, and may correspondingly generate one transcoding task for the target live-broadcasting data based on each transcoding rule, and therefore, may generate N transcoding tasks in total, where each transcoding task may include a uniform resource locator (URL), target resolution, and a target bit rate of the target live-broadcasting data. It should be noted that the live-broadcasting data corresponding to each transcoding task may be identified by using identification information. Transcoding tasks for different live-broadcasting data may have different identification information. Transcoding tasks for the same live-broadcasting data have the same identification information, and the identification information may be set by the management server or a third-party system.

Step 202. The management server sends the N transcoding tasks to a target transcoding server, and sends an encapsulation task for the target live-broadcasting data to a target secondary server.

During implementation, after generating the N transcoding tasks based on the transcoding request, the management server may select at least one target transcoding server from a transcoding server group, and then, send the N transcoding tasks to the at least one target transcoding server. In addition, the management server may select at least one target secondary server from a secondary server group, and then, send the encapsulation task for the target live-broadcasting data to the at least one target secondary server.

It should be noted that a transcoding task includes transcoding processing and encapsulation processing on the live-broadcasting data, and the encapsulation task includes only encapsulation processing on the live-broadcasting data. Therefore, the target secondary server does not need to transcode the live-broadcasting data, and may select a server device whose performance is far lower than that of the target transcoding server. In this way, device costs can be reduced.

Step 203. The target transcoding server obtains the target live-broadcasting data, transcodes the target live-broadcasting data according to at least one of the transcoding rules, and encapsulates the transcoded target live-broadcasting data.

During implementation, the target transcoding server may receive the transcoding task sent by the management server, and then, may obtain the target live-broadcasting data from a live-broadcasting source based on the URL of the target live-broadcasting data included in the transcoding task. Subsequently, the target transcoding server may transcode, according to the transcoding rule included in the received transcoding task, the resolution and the bit rate of the target live-broadcasting data into a specified target resolution and a specified target bit rate in the transcoding rule. Further, the target transcoding server may encapsulate the transcoded target live-broadcasting data. It should be noted that there may be a plurality of target transcoding servers in this step, each target transcoding server may process one or more of the N transcoding tasks according to this step, and each transcoding task is processed by only one target transcoding server.

Step 204. The target secondary server obtains the target live-broadcasting data, and encapsulates the target live-broadcasting data.

During implementation, the target secondary server may receive the encapsulation task sent by the management server, and then, may obtain the target live-broadcasting data from the live-broadcasting source based on the URL of the target live-broadcasting data included in the encapsulation task. Subsequently, the target secondary server may encapsulate the obtained target live-broadcasting data, to obtain encapsulated live-broadcasting data having an original bit rate and original resolution. It should be noted that the target secondary server in this step may be a subgroup including a plurality of secondary servers, where each secondary server in the subgroup may perform the same encapsulation processing on the target live-broadcasting data.

Further, the secondary server group includes a plurality of subgroups. Different subgroups process encapsulation tasks for different live-broadcasting data. A plurality of secondary servers in a same subgroup processes a same encapsulation task. Therefore, when a processing capability of the secondary server group reaches an upper limit, a subgroup may be added to expand the capacity. Correspondingly, when a subgroup is in an idle state, the subgroup may be deleted, to conserve devices.

Step 205. The target transcoding server and/or the target secondary server provides a live-broadcasting service by using a preset target VIP based on the encapsulated target live-broadcasting data.

Specifically, when each transcoding server is deployed, a VIP shared by the transcoding server and each secondary server is correspondingly created. Similarly, when a secondary server is added, a VIP shared by the secondary server and each existing transcoding server is also created, so that there is a preset target VIP shared by each target transcoding server that is currently deployed and each target secondary server. In this way, the target transcoding server and the target secondary server may provide the live-broadcasting by using the corresponding preset target VIP service based on the encapsulated target live-broadcasting data. In this way, the target transcoding server and the target secondary server can be arbitrarily switched.

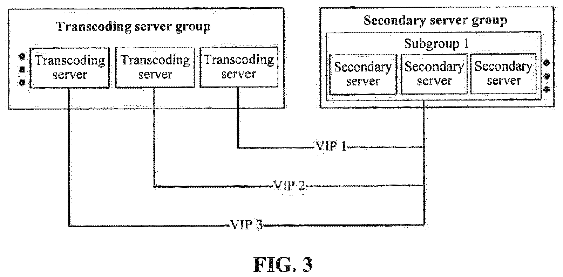

Considering the foregoing case of a plurality of target transcoding servers and a plurality of target secondary servers, the plurality of the target secondary server may form a subgroup, and each target transcoding server may create a different target VIP with the subgroup. For details, refer to FIG. 3.

Optionally, if the encapsulation task for the current target live-broadcasting data already exists, the management server does not need to send the encapsulation task to a secondary server again after receiving the transcoding request for the target live-broadcasting data, and directly determine the secondary server processing the encapsulation task as the target secondary server. Correspondingly, a part of processing of step 202 may be as follows: if no transcoding request for the target live-broadcasting data has been received before the current transcoding request for the target live-broadcasting data is received, sending, by the management server, the encapsulation task for the target live-broadcasting data to the target secondary server.

During implementation, after receiving the transcoding request for the target live-broadcasting data, the management server may detect whether the management server has received the transcoding request for the same target live-broadcasting data before the current transcoding request for the target live-broadcasting data is received. If no corresponding transcoding request has been received, the management server may send the encapsulation task for the target live-broadcasting data to the target secondary server. If the corresponding transcoding request has been received, it indicates that the management server already sends the encapsulation task for the target live-broadcasting data to the secondary server group. Further, the management server only needs to determine the secondary server encapsulating the target live-broadcasting data, as the target secondary server, so as to determine VIPs shared by the target transcoding servers and the target secondary server, and provide the live-broadcasting service by using these VIPs.

Optionally, the management server may evenly assign different transcoding tasks for the same live-broadcasting data to all transcoding servers. Correspondingly, a part of processing of step 202 may be as follows: determining, by the management server, M transcoding servers that have not transcoded the target live-broadcasting data; and if M is greater than or equal to N, determining, by the management server, N target transcoding servers having lowest load in the M transcoding servers, and respectively sending the N transcoding tasks to the N target transcoding servers; or if M is less than N, after respectively sending M transcoding tasks of the N transcoding tasks to the M transcoding servers, determining, by the management server, N-M target transcoding servers having lowest load in all the transcoding servers, and respectively sending remaining N-M transcoding tasks to the target transcoding servers. In this way, load of transcoding servers may be balanced to some extent.

During implementation, in a process of selecting the target transcoding server from a plurality of transcoding servers, the management server may first determine, in the plurality of transcoding servers, the M (M is a natural number) transcoding servers (that is, all transcoding servers to which no transcoding task for the target live-broadcasting data has been assigned) that currently have not transcoded the target live-broadcasting data. If M is greater than or equal to N, the management server may determine the N target transcoding servers having the lowest load in the M transcoding servers, and then, respectively send the N transcoding tasks to the N target transcoding servers, that is, one transcoding task is assigned to one target transcoding server. If M is less than N, the management server may first respectively send M random transcoding tasks of the N transcoding tasks to the M transcoding servers, next, determine the N-M target transcoding servers having the lowest load in all the transcoding servers, and then, respectively send the remaining N-M transcoding tasks to the N-M target transcoding servers. Similarly, when selecting the target secondary server, the management server may also select a plurality of secondary servers having relatively low load.

Optionally, a load level of each transcoding server may be determined according to a currently performed transcoding task. Corresponding processing may be as follows: determining, by the management server according to a pre-stored transcoding task weight table, weights of all transcoding tasks currently performed by each transcoding server; determining, by the management server, a summation of the weights of all the transcoding tasks currently performed by each transcoding server as a weight of each transcoding server; and determining, by the management server, a load level of each transcoding server according to a value of the weight of each transcoding server.

During implementation, technical personnel of the live-broadcasting data processing system may determine, according to original resolution, an original bit rate, target resolution, and a target bit rate that correspond to a transcoding task, load levels of transcoding servers occupied by different transcoding tasks, and embody the load levels in a form of weights, so that the transcoding task weight table (referring to Table 1) can be created. Then, the transcoding task weight table is stored in the management server.

**Table 1**

| Original resolution | Original bit rate | Target resolution | Target bit rate | Weight |
|---|---|---|---|---|
| 1920^{∗}1080 | 1600 Kbps | 1280^{∗}720 | 1600 Kbps | 30 |
| 1280^{∗}720 | 2400 Kbps | 720^{∗}480 | 1200 Kbps | 20 |
| 1920^{∗}1080 | 1200 Kbps | 1280^{∗}720 | 1200 Kbps | 25 |
| ... | | | | |

In this way, when determining a load level of each transcoding server, the management server may first determine, according to the foregoing transcoding task weight table, the weights of all the transcoding tasks currently performed by each transcoding server, and then, determine the summation of the weights of all the transcoding tasks currently performed by each transcoding server as the weight of each transcoding server. Further, the management server may determine the load level of each transcoding server according to the value of the weight of each transcoding server, and a smaller weight indicates lower load of a transcoding server.

Optionally, the target secondary server may replace the target transcoding server to continue providing the live-broadcasting service when the target transcoding server is faulty. Correspondingly, the processing of step 205 may be as follows: when the target transcoding server works normally, providing, by the target transcoding server, the live-broadcasting service by using the preset target VIP based on the encapsulated target live-broadcasting data; and when the target transcoding server is faulty, providing, by the target secondary server, the live-broadcasting service by using the preset target VIP based on the encapsulated target live-broadcasting data.

During implementation, when a user wants to obtain target live-broadcasting data by using a terminal, the terminal may send an obtaining request for the target live-broadcasting data to a target VIP. If the target transcoding server is in a normal working state, the target VIP points to the target transcoding server. The target transcoding server may receive the obtaining request, and may further feedback the encapsulated target live-broadcasting data to the terminal. However, if the target transcoding server is in a faulty state, the target VIP points to the target secondary server. The target secondary server may receive the obtaining request, and may further feedback the encapsulated target live-broadcasting data to the terminal. Herein, primary and secondary service software may be installed on both the target transcoding server and the target secondary server. The primary and secondary service software may be used to adjust an IP displayed externally by a server. Specifically, when the target transcoding server works normally, the primary and secondary service software on the target transcoding server changes an IP displayed externally into the preset target VIP, and the primary and secondary service software on the target secondary server sets an IP displayed externally into an IP of the target secondary server. When the target transcoding server is faulty, the primary and secondary service software on the target transcoding server changes the IP displayed externally into an IP of the target transcoding server, and the primary and secondary service software on the target secondary server sets the IP displayed externally into the preset target VIP.

By using the foregoing method, backup switching can be implemented when the target transcoding server is faulty, to ensure that a user can successfully obtain live-broadcasting data, thereby reducing bad user experience as much as possible. In addition, when the target transcoding server restores to a normal state, the target secondary server may be switched to the target transcoding server in time, to restore display at a normal bit rate and resolution as soon as possible, thereby ensuring the user experience.

It should be noted that in the embodiments of the present disclosure, the transcoding request for the target live-broadcasting data is received by the management server and is transformed into different transcoding tasks according to different specified target resolution and different specified target bit rates, and the transcoding tasks are assigned to at least one target transcoding server. One target secondary server is deployed for the transcoding tasks corresponding to the target live-broadcasting data, to provide a backup service when any target transcoding server is faulty. That is, transcoding tasks corresponding to the same live-broadcasting data correspond to the same target backup server, and it is not necessary to allocate one secondary server to each transcoding task to process a backup task, thereby saving secondary server resources. Moreover, a scheduling policy may be set and a secondary server group may be managed to ensure utilization of a secondary server.

In this embodiment of the present disclosure, after obtaining a transcoding request for target live-broadcasting data, a management server correspondingly generates N transcoding tasks for the target live-broadcasting data according to N transcoding rules carried in the transcoding request. The management server sends the N transcoding tasks to a target transcoding server, and sends an encapsulation task for the target live-broadcasting data to a target secondary server. The target transcoding server obtains the target live-broadcasting data, transcodes the target live-broadcasting data according to at least one of the transcoding rules, and encapsulates the transcoded target live-broadcasting data. The target secondary server obtains the target live-broadcasting data, and encapsulates the target live-broadcasting data. The target transcoding server and/or the target secondary server provide(s) a live-broadcasting service by using a preset target VIP based on the encapsulated target live-broadcasting data. In this way, an ordinary server having relatively low hardware costs may be used as a secondary server, and a plurality of transcoding servers transcoding same live-broadcasting data may use a same server as a secondary server, thereby reducing the quantity of transcoding servers required by a live-broadcasting service background, and reducing costs for providing a live-broadcasting service.

Based on the same technical concept, an embodiment of the present disclosure further provides a system for providing a live-broadcasting service. The system includes: a management server, a target transcoding server, and a target secondary server, where
the management server is configured to: after obtaining a transcoding request for target live-broadcasting data, correspondingly generate N transcoding tasks for the target live-broadcasting data according to N transcoding rules carried in the transcoding request, send the N transcoding tasks to the target transcoding server, and send an encapsulation task for the target live-broadcasting data to the target secondary server;
the target transcoding server is configured to: obtain the target live-broadcasting data, transcode the target live-broadcasting data according to at least one of the transcoding rules, encapsulate the transcoded target live-broadcasting data, and provide a live-broadcasting service by using a preset target VIP based on the encapsulated target live-broadcasting data; and
the target secondary server is configured to: obtain the target live-broadcasting data, encapsulate the target live-broadcasting data, and provide the live-broadcasting service by using the preset target VIP based on the encapsulated target live-broadcasting data.

Optionally, the management server is specifically configured to:
if no transcoding request for the target live-broadcasting data has been received before the current transcoding request for the target live-broadcasting data is received, send the encapsulation task for the target live-broadcasting data to the target secondary server.

Optionally, the management server is specifically configured to:
determine M transcoding servers that have not transcoded the target live-broadcasting data; and
if M is greater than or equal to N, determine N target transcoding servers having lowest load in the M transcoding servers, and respectively send the N transcoding tasks to the N target transcoding servers; or
if M is less than N, after respectively sending M transcoding tasks of the N transcoding tasks to the M transcoding servers, determine N-M target transcoding servers having lowest load in all transcoding servers, and respectively send remaining N-M transcoding tasks of the N transcoding tasks to the N-M target transcoding servers.

Optionally, the management server is further configured to:
determine, according to a pre-stored transcoding task weight table, weights of all transcoding tasks currently performed by each transcoding server;
determine a summation of the weights of all the transcoding tasks currently performed by each transcoding server as a weight of each transcoding server; and
determine a load level of each transcoding server according to a value of the weight of each transcoding server.

Optionally, the target transcoding server is specifically configured to: when the target transcoding server works normally, provide the live-broadcasting service by using the preset target VIP based on the encapsulated target live-broadcasting data; and
the target secondary server is specifically configured to: when the target transcoding server is faulty, provide the live-broadcasting service by using the preset target VIP based on the encapsulated target live-broadcasting data.

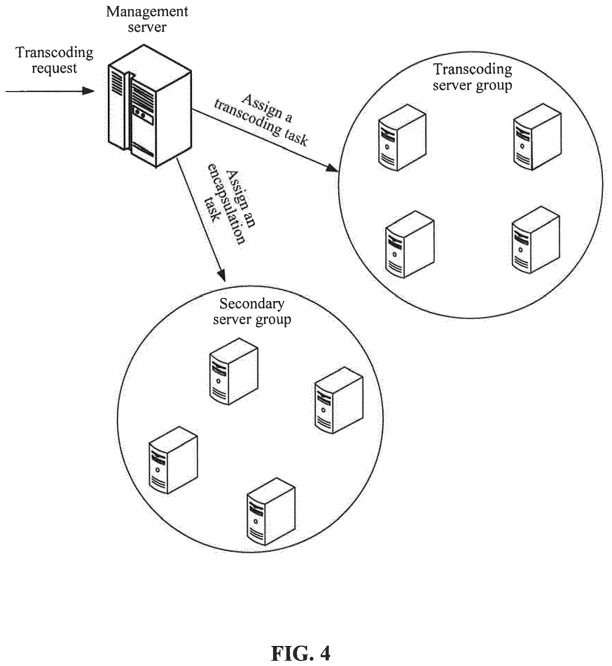

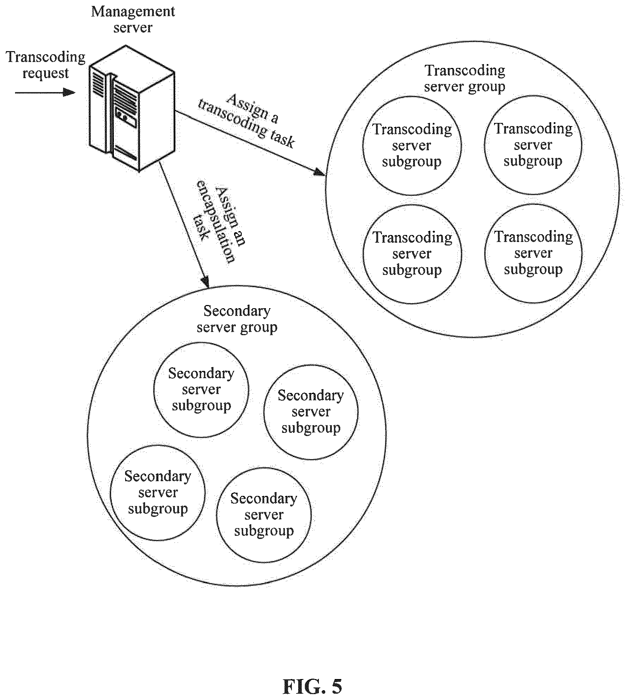

As shown in FIG. 4, the foregoing system may be a live-broadcasting data processing system. The system may include a management server, a transcoding server group, and a secondary server group. The transcoding server group may include a plurality of transcoding servers, and each transcoding server may perform transcoding and encapsulation tasks for a plurality of live-broadcasting data. The secondary server group may include a plurality of secondary servers, and each secondary server may perform an encapsulation task for the plurality of live-broadcasting data. Under a same condition, as shown in FIG. 5, a function of each of the foregoing transcoding servers may be implemented by a transcoding server subgroup including a plurality of transcoding servers. Similarly, a function of each secondary server may be implemented by a secondary server subgroup including a plurality of secondary servers. When a processing capability of the transcoding server group/the secondary server group reaches an upper limit, a transcoding server subgroup/a secondary server subgroup may be added to expand the capacity. Correspondingly, when the processing capability of the transcoding server group/the secondary server group is excessive, some subgroups in an idle state may be deleted, to conserve devices. For specific function implementation of the system, refer to the foregoing method embodiment.

In this embodiment of the present disclosure, after obtaining a transcoding request for target live-broadcasting data, a management server correspondingly generates N transcoding tasks for the target live-broadcasting data according to N transcoding rules carried in the transcoding request. The management server sends the N transcoding tasks to a target transcoding server, and sends an encapsulation task for the target live-broadcasting data to a target secondary server. The target transcoding server obtains the target live-broadcasting data, transcodes the target live-broadcasting data according to at least one of the transcoding rules, and encapsulates the transcoded target live-broadcasting data. The target secondary server obtains the target live-broadcasting data, and encapsulates the target live-broadcasting data. The target transcoding server and/or the target secondary server provide(s) a live-broadcasting service by using a preset target VIP based on the encapsulated target live-broadcasting data. In this way, an ordinary server having relatively low hardware costs may be used as a secondary server, and a plurality of transcoding servers transcoding same live-broadcasting data may use a same server as a secondary server, thereby reducing the quantity of transcoding servers required by a live-broadcasting service background, and reducing costs for providing a live-broadcasting service.

A person of ordinary skill in the art may understand that all or some of the steps of the foregoing embodiments may be implemented by using hardware, or may be implemented by a program instructing relevant hardware. The program may be stored in a computer readable storage medium. The storage medium may be a read-only memory, a magnetic disk, an optical disc, or the like.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A method for providing a live-broadcasting service, comprising:
after obtaining a transcoding request for target live-broadcasting data, correspondingly generating, by a management server, N transcoding tasks for the target live-broadcasting data according to N transcoding rules carried in the transcoding request;
sending, by the management server, the N transcoding tasks to a target transcoding server, and an encapsulation task for the target live-broadcasting data to a target secondary server;
obtaining, by the target transcoding server, the target live-broadcasting data, transcoding the target live-broadcasting data according to at least one of the transcoding rules, and encapsulating the transcoded target live-broadcasting data;
obtaining, by the target secondary server, the target live-broadcasting data, and encapsulating the target live-broadcasting data; and
providing, by the target transcoding server and/or the target secondary server, a live-broadcasting service by using a preset target virtual IP address (VIP) based on the encapsulated target live-broadcasting data.

2. The method according to claim 1, wherein the sending, by the management server, an encapsulation task for the target live-broadcasting data to a target secondary server comprises:
if no transcoding request for the target live-broadcasting data has been received before the current transcoding request for the target live-broadcasting data is received, sending, by the management server, the encapsulation task for the target live-broadcasting data to the target secondary server.

3. The method according to claim 1, wherein the sending, by the management server, the N transcoding tasks to a target transcoding server comprises:
determining, by the management server, M transcoding servers that have not transcoded the target live-broadcasting data; and
if M is greater than or equal to N, determining, by the management server, N target transcoding servers having lowest load in the M transcoding servers, and respectively sending the N transcoding tasks to the N target transcoding servers; or
if M is less than N, after respectively sending M transcoding tasks of the N transcoding tasks to the M transcoding servers, determining, by the management server, N-M target transcoding servers having lowest load in all transcoding servers, and respectively sending remaining N-M transcoding tasks of the N transcoding tasks to the N-M target transcoding servers.

4. The method according to claim 3, further comprising:
determining, by the management server, according to a pre-stored transcoding task weight table, weights of all transcoding tasks currently performed by each transcoding server;
determining, by the management server, a summation of the weights of all the transcoding tasks currently performed by each transcoding server as a weight of each transcoding server; and
determining, by the management server, a load level of each transcoding server according to a value of the weight of each transcoding server.

5. The method according to claim 1, wherein the providing, by the target transcoding server and/or the target secondary server, a live-broadcasting service by using a preset target VIP based on the encapsulated target live-broadcasting data comprises:
when the target transcoding server works normally, providing, by the target transcoding server, the live-broadcasting service by using the preset target VIP based on the encapsulated target live-broadcasting data; and
when the target transcoding server is faulty, providing, by the target secondary server, the live-broadcasting service by using the preset target VIP based on the encapsulated target live-broadcasting data.

6. A system for providing a live-broadcasting service, comprising: a management server, a target transcoding server, and a target secondary server, wherein
the management server is configured to: after obtaining a transcoding request for target live-broadcasting data, correspondingly generate N transcoding tasks for the target live-broadcasting data according to N transcoding rules carried in the transcoding request, send the N transcoding tasks to the target transcoding server, and send an encapsulation task for the target live-broadcasting data to the target secondary server;
the target transcoding server is configured to: obtain the target live-broadcasting data, transcode the target live-broadcasting data according to at least one of the transcoding rules, encapsulate the transcoded target live-broadcasting data, and provide a live-broadcasting service by using a preset target virtual IP address (VIP) based on the encapsulated target live-broadcasting data; and
the target secondary server is configured to: obtain the target live-broadcasting data, encapsulate the target live-broadcasting data, and provide the live-broadcasting service by using the preset target VIP based on the encapsulated target live-broadcasting data.

7. The system according to claim 6, wherein the management server is specifically configured to:
if no transcoding request for the target live-broadcasting data has been received before the current transcoding request for the target live-broadcasting data is received, send the encapsulation task for the target live-broadcasting data to the target secondary server.

8. The system according to claim 6, wherein the management server is specifically configured to:
determine M transcoding servers that have not transcoded the target live-broadcasting data; and
if M is greater than or equal to N, determine N target transcoding servers having lowest load in the M transcoding servers, and respectively send the N transcoding tasks to the N target transcoding servers; or
if M is less than N, after respectively sending M transcoding tasks of the N transcoding tasks to the M transcoding servers, determine N-M target transcoding servers having lowest load in all transcoding servers, and respectively send remaining N-M transcoding tasks of the N transcoding tasks to the N-M target transcoding servers.

9. The system according to claim 8, wherein the management server is further configured to:
determine, according to a pre-stored transcoding task weight table, weights of all transcoding tasks currently performed by each transcoding server;
determine a summation of the weights of all the transcoding tasks currently performed by each transcoding server as a weight of each transcoding server; and
determine a load level of each transcoding server according to a value of the weight of each transcoding server.

10. The system according to claim 6, wherein the target transcoding server is specifically configured to: when the target transcoding server works normally, provide the live-broadcasting service by using the preset target VIP based on the encapsulated target live-broadcasting data; and
the target secondary server is specifically configured to: when the target transcoding server is faulty, provide the live-broadcasting service by using the preset target VIP based on the encapsulated target live-broadcasting data.
